# EUROPÄISCHE PATENTSCHRIFT

(11) **EP 0 870 653 B1**
(45) Veröffentlichungstag und Bekanntmachung des Hinweises auf die Patenterteilung: **28.08.2002**
(21) Anmeldenummer: 98106496.7
(22) Anmeldetag: 08.04.1998
(51) Int. Cl.: B60R 22/48, A44B 11/25

(54) **Gurtschloss**
Belt buckle
Boucle de ceinture

(30) Priorität: 11.04.1997 DE 19715133
(43) Veröffentlichungstag der Anmeldung: 14.10.1998
(73) Patentinhaber: TAKATA-PETRI (Ulm) GmbH, 89081 Ulm (DE)
(72) Erfinder: Kopetzky, Robert, 89173 Lonsee (DE); Steidle, Thomas, 89073 Ulm (DE); Pietschmann, Frank, 89567 Sontheim (Brenz) (DE); Pleyer, Matthias, 89250 Senden (DE)
(74) Vertreter: Schmidt, Christian, Dipl.-Phys.

(56) Entgegenhaltungen:
- EP-A- 0 341 839
- US-A- 3 766 612
- US-A- 3 882 337
- US-A- 4 575 907
- US-A- 4 785 906
- US-A- 5 218 744

## Beschreibung

Die vorliegende Erfindung betrifft ein Gurtschloß für einen Sicherheitsgurt nach dem Oberbegriff des Anspruchs 1. Derartige Gurtschlösser sind grundsätzlich bekannt und dienen dazu, die Gurtzunge des Sicherheitsgurtes nach dem Anlegen des Gurtes sicher und lösbar zu verriegeln. US-A-4 575 907 betrifft ein derartiges Gurtschloß.

Für verschiedene Anwendungen, insbesondere in Kraftfahrzeugen, kann ein elektrisches Signal erforderlich sein, das einen Hinweis gibt, ob ein Sicherheitsgurt angelegt ist. Dies ist beispielsweise in US-A-3 766 612 offenbart. Ein solches Signal kann dazu verwendet werden, Warneinrichtungen zu betätigen, die dem Fahrzeuginsassen signalisieren, daß der Sicherheitsgurt noch angelegt werden muß. Auch kann ein solches Signal mit einer Airbagsteuerung verbunden werden, wodurch der Airbag früher ausgelöst werden kann, wenn sich auf dem zugehörigen Sitz eine Person befindet, die nicht angeschnallt ist, um einen größtmöglichen Schutz zu bieten. Ebenso kann ein Auslösen des Gurtstraffers verhindert werden, wenn der betreffende Gurt nicht benutzt wird.

Grundsätzlich sind Gurtschlösser bekannt, in die ein elektromechanisches Schaltelement eingebaut ist, welches das Einrasten eines Verriegelungselementes detektiert, das die Gurtzunge verriegelt. Derartige Vorrichtungen besitzen jedoch den Nachteil, daß das Schaltelement stets auf das Verriegelungselement eine Kraft ausübt, die entgegengesetzt zur Verriegelungsrichtung gerichtet ist. Dies ist unerwünscht, da hierdurch ein dauerhaft sicherer Betrieb nicht gewährleistet ist. Zudem besteht die Gefahr, daß die Schalteinrichtung bereits dann ein Signal abgibt, wenn die Gurtzunge im Gurtschloß zwar eingerastet, jedoch nicht sicher verriegelt ist (Pseudoverriegelung).

Es ist deshalb das der Erfindung zugrundeliegende Problem (Aufgabe), ein Gurtschloß zu schaffen, welches das sichere Verriegeln der Gurtzunge fehlerfrei detektiert.

Die Lösung dieser Aufgabe erfolgt bei einem Gurtschloß mit den Merkmalen des Oberbegriffs des Anspruchs 1 dadurch, daß an dem Gurtschloß eine Detektoreinrichtung vorgesehen ist, welche die Stellung des Sicherungselementes detektiert. Bei dem erfindungsgemäßen Gurtschloß wird somit nicht nur die Position des Verriegelungselementes sondern zusätzlich auch die Position des Sicherungselementes detektiert. Insbesondere wenn die geschlossene Endstellung des Sicherungselementes detektiert wird, läßt sich ein Signal erzeugen, das nur dann ausgelöst wird, wenn sich sowohl das Verriegelungselement wie auch das Sicherungselement in seiner verriegelten Endstellung befindet. Somit ist erfindungsgemäß ausgeschlossen, daß auch dann ein Signal erzeugt wird, wenn das Gurtschloß nur pseudoverriegelt ist, das heißt wenn noch die Möglichkeit besteht, daß sich die Gurtzunge aus dem Gurtschloß löst.

Vorteilhafte Ausführungsformen der Erfindung sind in der Beschreibung, den Unteransprüchen und den Zeichnungen beschrieben.

So ist es vorteilhaft, wenn das Sicherungselement beim Verriegeln zunächst eine Schwenkbewegung und anschließend eine Hubbewegung durchführt. Hierdurch kann die Detektoreinrichtung so in dem Gurtschloß angeordnet werden, daß das Ende der Hubbewegung des Sicherungselementes detektiert wird. Da das Gurtschloß auf jeden Fall ordnungsgemäß verriegelt ist, wenn das Sicherungselement seine Hubbewegung beendet hat, kann das hierbei erzeugte Signal einen sicheren Aufschluß über die Verriegelung der Gurtzunge in dem Gurtschloß geben.

Besonders vorteilhaft ist es, wenn die Detektoreinrichtung ein berührungsfreier Sensor ist, da in diesem Fall das Verriegeln des Verriegelungselementes bzw. die Bewegung des Sicherungselementes auf keine Weise behindert wird. Insbesondere wird keinem Element des Gurtschlosses eine Betätigungskraft entgegengesetzt, die ein ordnungsgemäßes Verriegeln oder Sichern verhindern oder erschweren könnte.

Nach einer weiteren vorteilhaften Ausführungsform der Erfindung ist die Detektoreinrichtung zumindest zum Teil in einer Aussparung des Gurtschloßrahmens angeordnet. Hierdurch läßt sich die Detektoreinrichtung einerseits platzsparend und andererseits sehr nahe bei dem Sicherungselement anordnen. Insbesondere reicht im Fall einer Hall-Sonde eine Aussparung von ca. 5 x 5 mm, um ein entsprechendes Bauteil einzusetzen. Durch eine feste Fixierung des Detektorelementes in der Aussparung kann ein unbeabsichtigtes Verschieben des Detektorelementes verhindert werden.

Nach einer weiteren vorteilhaften Ausführungsform kann die Detektoreinrichtung zumindest zum Teil an oder in dem Sicherungselement angeordnet sein. Im Fall der bereits erwähnten Hall-Sonde läßt sich ein Magnet mit sehr kleinen Abmessungen an dem Sicherungselement befestigen. Auch ist es möglich, den Magneten in das Sicherungselement zu integrieren. Falls das Sicherungselement aus Kunststoff besteht, kann der Magnet beispielsweise bei der Herstellung mit umspritzt werden. Es ist jedoch auch möglich, das Sicherungselement teilweise aus magnetisierbarem Kunststoff herzustellen und den der Hall-Sonde gegenüberliegenden Bereich dauerhaft zu magnetisieren.

Auch wenn die Verwendung einer Hall-Sonde erfindungsgemäß bevorzugt ist, sind grundsätzlich auch andere berührungslose Sensoren möglich. Beispielsweise könnte an dem Rahmen eine Reflexlichtschranke angeordnet werden, die auf einen stärker reflektierenden oder absorbierenden Bereich des Sicherungselementes gerichtet ist. Eine weitere Variante besteht in einem kapazitiven Näherungsschalter, dessen Kondensator das zeitbestimmende Element eines Oszillators bildet. Hierbei kann der Kondensator aus einer feststehenden Platte (Gurtschloßrahmen) und einer beweglichen Platte gebildet werden.

Die Hall-Sonde kann als digitaler Schalter oder als linearer Sensor ausgebildet sein, der ein analoges Profil ausgibt. In letzterem Fall müßte zum Ermitteln des Schaltpunktes mit einer vorgegebenen Referenzmarke verglichen werden.

Besonders vorteilhaft ist es, wenn an dem Gurtschloß nahe bei der Detektoreinrichtung eine Miniatur-Leiterplatte vorgesehen wird, auf der sich ein Mikrochip befindet. In diesem Fall wird am Ausgang der Leiterplatte ein verstärktes elektrisches Signal abgegeben, das störungsarm weitergeleitet werden kann.

Nachfolgend wird die vorliegende Erfindung rein beispielhaft anhand einer vorteilhaften Ausführungsform und unter Bezugnahme auf die beigefügten Zeichnungen beschrieben.

Es zeigen:
- Fig. 1: eine Seitenansicht eines erfindungsgemäßen Gurtschlosses ohne eingesteckte Gurtzunge;
- Fig. 2: das Gurtschloß von Fig. 1 mit eingesteckter und verriegelter sowie gesicherter Gurtzunge.

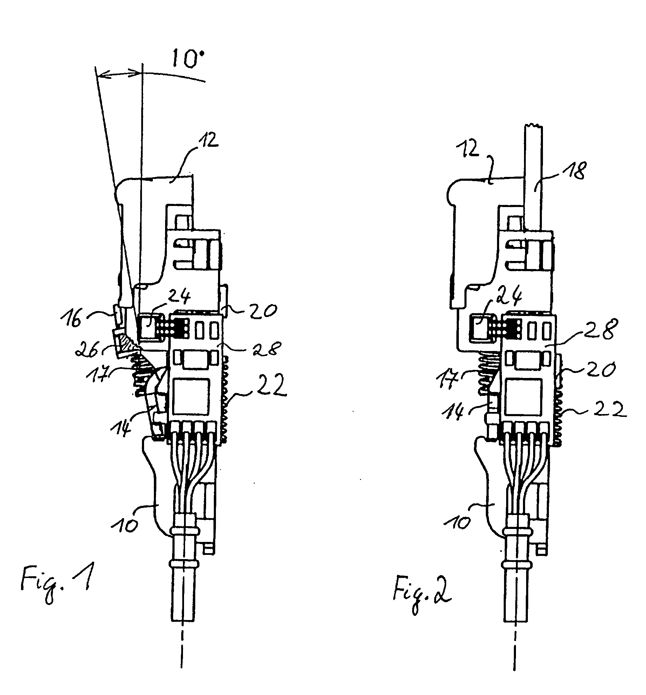

Das in Fig. 1 und 2 dargestellte Gurtschloß, dessen Kunststoffgehäuse in der Darstellung weggelassen ist, weist einen im wesentlichen U-förmigen Rahmen 10 auf, an dem eine Entriegelungstaste 12, ein Verriegelungselement 14 sowie ein Sicherungselement 16 befestigt sind.

Zum Verriegeln der Gurtzunge 18 (Fig. 2) eines Sicherheitsgurtes wird die Gurtzunge 18 in das Gurtschloß eingeführt, wobei die beiden Schenkel sowie die Rückseite des Rahmens 10 und eine Fläche der Entriegelungstaste 12 eine Führung bilden. Bei Einstecken der Gurtzunge 18 in das Gurtschloß schlägt diese zunächst mit ihrer vorderen Stirnfläche an einem Auswerfer 20 an, der längsverschieblich in dem Rahmen 10 geführt ist. Bei weiterem Einführen der Gurtzunge wird der Auswerfer 20 entgegen der Kraft der Auswurffeder 22 nach unten gedrückt.

Das Verriegelungselement 14, das in dem Rahmen 10 verschwenkbar gelagert ist, besitzt an seinem unteren Ende eine (in den Fig. nicht erkennbare) Zunge, gegen die der Auswerfer 20 anschlägt, wenn die Gurtzunge vollständig in das Gurtschloß eingesteckt wird. Hierdurch wird das Verriegelungselement 14 von der in Fig. 1 dargestellten Schräglage nach rechts verschwenkt, bis es im wesentlichen parallel zu der eingesteckten Gurtzunge 18 verläuft. Durch eine an dem Verriegelungselement 14 angeformte Verriegelungsnase (in den Figuren nicht erkennbar), die in eine Aussparung der Gurtzunge eingreift, ist die Gurtzunge 18 in dem Gurtschloß verriegelt. Wie in Fig. 1 angedeutet ist, schwenkt demnach das Verriegelungselement 14 um ca. 10°, wenn es durch Einstecken der Gurtzunge 18 in die verriegelte Position geschwenkt wird.

Um zu verhindern, daß sich das Verriegelungselement 14 ungewollt aus der Verriegelungsstellung löst, ist das Sicherungselement 16 vorgesehen, welches das Verriegelungselement 14 im verriegelten Zustand sichert. Das Sicherungselement 16 ist hierfür als Schlitten ausgebildet, der an dem Verriegelungselement 14 befestigt ist und sich einerseits zusammen mit dem Verriegelungselement 14 verschwenken läßt. Andererseits kann der Schlitten bzw. das Sicherungselement 16 auch in bzw. entgegen der Einsteckrichtung der Gurtzunge 18 auf dem Verriegelungselement 14 verschoben werden. In dem in Fig. 1 dargestellten, nicht verriegelten Zustand wird das Sicherungselement 16 von einer Feder 17 gegen einen (nicht dargestellten) Haltestift gedrückt. Bei Einstekken der Gurtzunge 18 in das Gurtschloß wird das Verriegelungselement 14 wie oben beschrieben verschwenkt, wodurch das Sicherungselement 16 mitverschwenkt wird. Nachdem jedoch das Verriegelungselement 14 seine Verriegelungsposition (parallel zur eingesteckten Gurtzunge 18) erreicht hat, ist das Sicherungselement 16 so weit mitverschwenkt worden, daß es von der Feder 17 in Richtung der Entriegelungstaste 12 und hinter den Haltestift gedrückt werden kann. Hierdurch wird das Sicherungselement 16 durch die Feder 17 so weit linear in Richtung der Entriegelungstaste 12 verschoben, bis sich das Verriegelungselement 14 zwischen den Haltestift und das bereits in seiner Endstellung befindliche Verriegelungselement 14 geschoben hat. In dieser Stellung wird das Sicherungselement 16 durch die Feder 17 gehalten, so daß es nicht mehr möglich ist, daß sich das Verriegelungselement 14 von selbst aus dem verriegelten Zustand löst.

Zum Öffnen des Gurtschlosses muß die Entriegelungstaste 12 entgegen der Kraft einer nicht dargestellten Feder betätigt werden, wodurch das Sicherungselement 16 entgegen der Kraft der Feder 17 nach unten gedrückt wird und den Raum zwischen dem Verriegelungselement 14 und dem Haltestift freigibt. Im Anschluß daran kippt das Verriegelungselement 14 in die Entriegelungsposition (Fig.1) zurück, wodurch die Gurtzunge 18 aufgrund der Federkraft der Auswurffeder 22 von dem Auswerfer 20 aus dem Gurtschloß ausgeworfen wird.

An dem in den Fig. 1 und 2 dargestellten Gurtschloß ist ferner eine Detektoreinrichtung vorgesehen, die bei dem dargestellten Ausführungsbeispiel eine Hall-Sonde 24 und einen Magneten 26 aufweist. Die Hall-Sonde 24 ist in einer Aussparung bzw. einem Fenster des Rahmens 10 angeordnet. Der Magnet 26, der in Fig. 1 schraffiert dargestellt ist, ist an dem Sicherungselement 16 befestigt. Die Lage der Hall-Sonde 24 und des Magneten 26 ist erfindungsgemäß so gewählt, daß sich die Hall-Sonde 24 und der Magnet 26 nur dann nahe gegenüberliegen, wenn sich das Sicherungselement 16 in seiner geschlossenen Endstellung befindet. Die Detektoreinrichtung detektiert somit die Stellung des Sicherungselementes und im gewählten Ausführungsbeispiel nur die geschlossene Endstellung des Sicherungselementes 16. Die Hall-Sonde gibt somit nur dann ein Signal ab, wenn das Sicherungselement 16 sowohl seine Schwenkbewegung um ca. 10° wie auch seine anschließende Hubbewegung in Richtung der Entriegelungstaste 12 vollständig durchgeführt hat.

Die Hall-Sonde 24 ist auf einer Miniatur-Leiterplatte 28 angeordnet, die an dem Rahmen 10 des Gurtschlosses befestigt ist. Auf dieser Leiterplatte befinden sich verschiedene elektronische Bauelemente und insbesondere ein integrierter Schaltkreis, der am Ausgang der Leiterplatte ein elektrisches Signal erzeugt, das nicht mehr verstärkt werden muß, sondern sofort einer entsprechenden Auswerteeinrichtung zugeführt werden kann. Es ist jedoch auch möglich, das Detektorelement selbst als integrierten Schaltkreis vorzusehen, der die Verstärker- und Schaltfunktion bereits erfüllt. In diesem Fall kann die Leiterplatte zur Erzeugung eines diagnosefähigen Gurtschloßschalters dienen.

Durch die erfindungsgemäße Anordnung der Detektoreinrichtung an dem Gurtschloß wird am Ausgang der Leiterplatte 28 ein Signal erzeugt, das einen sicheren Schluß darauf zuläßt, ob das Gurtschloß tatsächlich oder nur scheinbar verriegelt ist. Bei einer Pseudo-Verriegelung entsteht am Ausgang der Leiterplatte das Signal "nicht verriegelt", da das von dem Detektorelement erfaßte Magnetfeld aufgrund der nicht vollständigen oder fehlenden Hubbewegung des Sicherungselementes wesentlich kleiner ist, als das bei einer ordnungsgemäßen Verriegelung und Sicherung gemessene. So entsteht bei einem Linear-Sensor als Detektorelement im Falle der tatsächlichen Verriegelung, das heißt dem ordnungsgemäßen Einrasten sowohl des Verriegelungselementes 14 wie auch des Sicherungselementes 16 ein Signal, das ca. fünf mal so stark ist, wie das entsprechende Signal im Falle der sogenannten Pseudo-Verriegelung, bei der das Sicherungselement 16 nicht ordnungsgemäß eingerastet ist. Aufgrund der gewählten Anordnung, bei der die Hall-Sonde 24 auf einer Leiterplatte 26 befestigt ist, die sich ebenfalls an dem Rahmen 10 befindet, läßt sich durch auf der Leiterplatte angeordnete Optokoppler oder dergleichen eine galvanische Trennung von der Auswerteelektronik (beispielsweise der Airbagsteuerung) erzielen, was die Sicherheit des Systems erhöht. Um den Einfluß von Störmagnetfeldern weiter zu verringern, kann auf der Leiterplatte auch ein Mikroprozessor verwendet werden, der die von der Hall-Sonde abgegebenen Signale mit eingespeicherten Kennlinien vergleicht. Durch den Einsatz eines solchen Mikrocontrollers innerhalb des Gurtschlosses lassen sich bei der Datenübertragung wesentlich komplexere Übertragungsprotokolle realisieren.

Gleichzeitig können hierdurch elektronische Abschirmmaßnahmen verwirklicht werden.

## Patentansprüche

1. Gurtschloß für einen Sicherheitsgurt, mit
- einem Rahmen (10),
- einem Verriegelungselement (14) zum Verriegeln der Gurtzunge (18), und
- einem Sicherungselement (16), welches das Verriegelungselement (14) im verriegelten Zustand sichert,
**dadurch gekennzeichnet, daß**
an dem Gurtschloß eine Detektoreinrichtung (24, 26, 28) vorgesehen ist, welche die Stellung des Sicherungselementes (16), insbesondere dessen geschlossene Endstellung, detektiert.

2. Gurtschloß nach Anspruch 1,
**dadurch gekennzeichnet, daß**
das Sicherungselement (16) beim Verriegeln zunächst eine Schwenkbewegung und anschließend eine Hubbewegung durchführt, wobei die Detektoreinrichtung vorzugsweise das Ende der Hubbewegung detektiert.

3. Gurtschloß nach Anspruch 1 oder 2,
**dadurch gekennzeichnet, daß**
die Detektoreinrichtung ein berührungsfreier Sensor, vorzugsweise eine Hall-Sonde (24) ist.

4. Gurtschloß nach zumindest einem der vorstehenden Ansprüche,
**dadurch gekennzeichnet, daß**
die Detektoreinrichtung zumindest zum Teil in einer Aussparung des Rahmens (10) angeordnet ist.

5. Gurtschloß nach zumindest einem der vorstehenden Ansprüche,
**dadurch gekennzeichnet, daß**
die Detektoreinrichtung (26) zumindest zum Teil an oder in dem Sicherungselement (16) angeordnet ist.

6. Gurtschloß nach zumindest einem der vorstehenden Ansprüche,
**dadurch gekennzeichnet, daß**
die Detektoreinrichtung eine Hall-Sonde (24) und einen Magneten (26) aufweist, der in das Sicherungselement (16) integriert ist.

7. Gurtschloß nach zumindest einem der vorstehenden Ansprüche,
**dadurch gekennzeichnet, daß**
das Sicherungselement (16) zumindest teilweise aus magnetisierbarem Kunststoff besteht.

8. Gurtschloß nach zumindest einem der vorstehenden Ansprüche,
**dadurch gekennzeichnet, daß**
im Bereich des Rahmens eine Leiterplatte (28) mit einer Auswerteschaltung für die Detektoreinrichtung angeordnet ist.

9. Gurtschloß nach zumindest einem der vorstehenden Ansprüche,
**dadurch gekennzeichnet, daß**
im Bereich des Rahmens eine Leiterplatte (28) mit einem Mikrocontroller für die Detektoreinrichtung angeordnet ist.

## Claims

1. Belt lock for a safety belt comprising
- a frame (10),
- a latching element (14) for the latching of the belt tongue (18), and
- a securing element (16) which secures the latching element (14) in the latched state,
**characterized in that** a detector device (24, 26, 28) is provided at the belt lock which detects the position of the securing element (16), in particular its closed end position.

2. Belt lock in accordance with claim 1, **characterized in that** the securing element (16) first executes a pivotal movement during latching and subsequently a stroke movement, with the detector device preferably detecting the end of the stroke movement.

3. Belt lock in accordance with claim 1 or claim 2, **characterized in that** the detector device is a contact-free sensor, preferably a Hall-probe (24).

4. Belt lock in accordance with at least one of the preceding claims, **characterized in that** the detector device is arranged at least in part in a cut-out of the frame (10).

5. Belt lock in accordance with at least one of the preceding claims, **characterized in that** the detector device (26) is arranged at least in part on or in the securing element (16).

6. Belt lock in accordance with at least one of the preceding claims, **characterized in that** the detector device has a Hall probe (24) and a magnet (26), which is integrated into the securing element (16).

7. Belt lock in accordance with at least one of the preceding claims, **characterized in that** the securing element (16) consists at least partly of magnetisable plastic.

8. Belt lock in accordance with at least one of the preceding claims, **characterized in that** a circuit board (28) with an evaluation circuit for the detector device is arranged in the area of the frame.

9. Belt lock in accordance with at least one of the preceding claims, **characterized in that** a circuit board (28) with a microcontroller for the detector device is arranged in the area of the frame.

## Revendications

1. Boucle de ceinture pour une ceinture de sécurité, comprenant
- un cadre (10),
- un élément de verrouillage (14) pour verrouiller la languette de ceinture (18), et
- un élément de sécurité (16) qui assure l'élément de verrouillage (14) dans la situation verrouillée,
**caractérisée en ce qu'**un dispositif détecteur (24, 26, 28) est prévu sur la boucle de ceinture, ledit dispositif détectant la position de l'élément de sécurité (16), en particulier sa position finale fermée.

2. Boucle de ceinture selon la revendication 1,
**caractérisée en ce que** l'élément de sécurité (16) exécute, lors du verrouillage, tout d'abord un mouvement de pivotement et ensuite un mouvement de soulèvement, et **en ce que** le dispositif détecteur détecte de préférence la fin du mouvement de soulèvement.

3. Boucle de ceinture selon l'une ou l'autre des revendications 1 et 2,
**caractérisée en ce que** le dispositif détecteur est un capteur sans contact, de préférence une sonde de Hall (24).

4. Boucle de ceinture selon l'une au moins des revendications précédentes,
**caractérisée en ce que** le dispositif détecteur est agencé au moins pour partie dans une échancrure du cadre (10).

5. Boucle de ceinture selon l'une au moins des revendications précédentes,
**caractérisée en ce que** le dispositif détecteur (26) est agencé au moins pour partie sur ou dans l'élément de sécurité (16).

6. Boucle de ceinture selon l'une au moins des revendications précédentes,
**caractérisée en ce que** le dispositif détecteur comprend une sonde de Hall (24) et un aimant (26), lequel est intégré dans l'élément de sécurité (16).

7. Boucle de ceinture selon l'une au moins des revendications précédentes,
**caractérisée en ce que** l'élément de sécurité est au moins partiellement réalisé en matière plastique susceptible d'être aimantée.

8. Boucle de ceinture selon l'une au moins des revendications précédentes,
**caractérisée en ce qu'**il est prévu une plaque à circuits (28) agencée dans la région du cadre, comportant un circuit d'évaluation pour le dispositif détecteur.

9. Boucle de ceinture selon l'une au moins des revendications précédentes,
**caractérisée en ce qu'**il est prévu une plaque à circuits (28) agencée dans la région du cadre, comportant un micro-contrôleur pour le dispositif détecteur.
